# EUROPÄISCHE PATENTANMELDUNG

(11) **EP 2 863 375 A1**
(43) Veröffentlichungstag der Anmeldung: **22.04.2015**
(21) Anmeldenummer: 13189363.8
(22) Anmeldetag: 18.10.2013
(51) Int. Cl.: G09B 5/14, G09B 7/07, G06Q 10/10

(54) **System und Verfahren zum interaktiven Kommunizieren**

(71) Anmelder: Deutsche Telekom AG, 53113 Bonn (DE)
(72) Erfinder: Schneider, Lutz, 13509 Berlin (DE); Glass, Gregor, 12203 Berlin (DE); Schmidt, Aubrey-Derrick, 10439 Berlin (DE); Wolter, Alexandra Sophie, 16547 Birkenwerder (DE)
(74) Vertreter: Vossius & Partner Patentanwälte Rechtsanwälte mbB

(57) **Zusammenfassung**

Verfahren zum interaktiven Kommunizieren mittels eines Systems, wobei das System aufweist: eine Datenbank zur Speicherung von Nutzerprofilen und Inhalten, Ablaufvorlagen und Abläufen; sowie eine Entwurfseinrichtung zum Ermitteln von Inhalten, Ablaufvorlagen und Abläufen. Das Verfahren weist dabei folgende Schritte auf: Verbinden eines oder mehrerer Nutzer mit dem System; Zuordnen der verbundenen Nutzer zu jeweils in der Datenbank gespeicherten Nutzerprofilen; Ermitteln von zu den Nutzerprofilen der verbundenen Nutzer passenden Inhalten, Ablaufsvorlagen und/oder Abläufen durch die Entwurfseinrichtung; Senden der ermittelten Inhalte, Ablaufsvorlagen und/oder Abläufe an mindestens einen der mit dem System verbundenen Nutzer; Empfangen und Verarbeiten von durch mindestens einen der verbundenen Nutzer interaktiv generierten Signalen zum Erstellen eines Ablaufs aus den zu dem mindestens einen Nutzer übermittelten Inhalten, Ablaufsvorlagen oder Abläufen und/oder aus anderen Inhalten.

## Beschreibung

Die Erfindung betrifft ein System und ein Verfahren zur Unterstützung und Erstellung von interaktiven, bilateralen Kommunikationselementen mit Ausprägungen im Bereich der allgemeinen Telekommunikation, des interaktiven Lernens sowie der Medien.

### Telefonie

Telefonie stellt eine Technologie dar, die bereits mehr als 150 Jahre technisch umsetzbar ist. Hierbei ist es durch verschiedene Techniken möglich, von Punkt zu Punkt zu telefonieren, aber mittlerweile auch Konferenzschaltungen zu benutzen, um mit mehreren anderen Telefonieteilnehmern zu sprechen. Diese Technologie wurde im Internetzeitalter derart verändert, dass die klassische Telefoninfrastruktur (Plain Old Telefon Service-POTS) durch moderne Internetinfrastrukter ersetzt werden kann. Dieser Wechsel brachte neue Anbieter und entsprechende Programme auf den Markt, welche eine breite Marktdurchdringung erreicht haben, z. B. Skype [Skype]. Weiterhin setzten sich, unter anderem auch wegen des Technologiewechsels, andere Formen der Kommunikation durch, z. B. Chat und Audio / Video (A/V) Kommunikation (im Folgenden auch kurz "Audio" und "Video" bezeichnet). Beispiele hierfür sind ICQ bzw. Google Talk. Diese Technologien und Programme ermöglichen eine aktive Kommunikation, welche den Fokus dieser Technologien darstellt.

### Interaktives Lernen

Eine Übersicht zum Thema "Interaktives Lernen" wurde von Reeves beschrieben [Reeves 2003], wobei es hier wichtig ist, zu betonen, dass sich Interaktivität auf den Empfänger bezieht, welcher vorgefertigte Inhalte bekommt und darauf reagiert. Der Fokus dieser Beschreibungen liegt vor allem beim verbesserten Lernen, welches durch Interaktivität ermöglicht wird. Der allgemeinere Fokus, das allgemeinere Vermitteln von Inhalten, wird hierbei jedoch außer Acht gelassen.

Zahlreiche weitere Publikationen beschreiben die Einbindung von Internettechnologien in die Domäne des interaktiven Lernens, stellen aber keinen Fortschritt zum bereits beschriebenen Stand der Technik dar, z. B. Guzly [Guzly 2001]. Einen neuen Aspekt in diesen Bereich beschreibt Rieber [Rieber 1996]. Rieber erörtert die mögliche Bedeutung von "Spielen" auf die Lernfähigkeit im Bereich des interaktiven Lernens.

Ein zentrales Patent im Bereich des interaktiven Lernens wird von Lubin [Patent US IL1 1995] beschrieben. Das Patent beschreibt ein System zum empfängerbezogenen interaktiven Vermitteln von Wissen, welches benötigt wird, um spezifische Computerprogramme zu verwenden. Dieses Patent ist darauf beschränkt, dass es (i) sich nur auf das Lernen von Wissen bezieht, das sich auf die Nutzung von Computerprogrammen bezieht, und (ii) die Interaktivität sich wieder auf den Empfänger bezieht.

In [Patent US IL2 2012] beschreiben Ho *et al.* ein sensorbasiertes, computergestütztes Lemsystem, welches Sensoren benutzt, um das Konzentrationslevel von Lernenden zu erfassen, damit entsprechende, vom System erzeugte Ereignisse das Konzentrationslevel des Lernenden steigern können.

### Interaktive Geschichten und Bücher

Interaktive Geschichten wurden vor allem in Form von Computerspielen realisiert. Die Interaktion mit der Umgebung bestimmt hierbei maßgeblich den Ablauf der Geschichte. Eingeschränkt wurden diese Geschichten durch einen linearen Handlungsstrang, dem gefolgt werden musste, wobei diese Limitierung in den letzten Jahren durch (quasi) freie Handlungsfähigkeit ("Open World") aufgehoben wurde. Ein Beispiel für einen interaktiven Geschichtsablauf stellt die interaktive Geschichte "Façade" [Façade 2006] dar. In dieser Geschichte bewegt sich der Nutzer in einer virtuellen Umgebung und trifft auf zwei mittels künstlicher Intelligenz (KI) gesteuerte Charaktere, welche auf seine Texteingaben reagieren und somit den Ablauf der Geschichte bestimmen.

Zahlreiche Konzepte zu interaktiven Büchern wurden in den USA patentiert. In [Patent US IB1 1995] beschreibt Smith eine technische Realisierung zu einem Interaktiven Buch, welches ein technisches Gerat darstellt, mit welchem man interagieren kann. Mit diesem Gerät lassen sich z. B. Comics darstellen, welche in den Bildern druckbare Elemente enthalten. Basierend auf diesen Interaktionen wird die Geschichte weitererzählt. Dieses Patent beschreibt ein System, welches den Fokus auf die Empfängerinteraktivität legt. Da hierzu ein dediziertes, technisch proprietäres Gerät benötigt wird, welches eine begrenzte Anzahl an festgelegten Druckpunkten besitzt, ist dadurch der Anwendungsbereich bei der Nutzung stark eingeschränkt (u. a. Comics und Bilder).

[Patent US IB4 2009] skizziert ein System, bei dem auf der einen Seite Audio- und Videosignale aufgenommen werden können, welche anschließend zentral gespeichert werden, um diese dann bei einem Empfänger abzuspielen.

[Patent US IB5 2012] erläutert eine Erfindung, welche die Erstellung von empfängerbezogenen interaktiven Büchern ermöglicht.

In [Patent US IB2 1995] beschreibt Redford eine Art Fernbedienung als Teil eines interaktiven Buches. Die Fernbedienung bietet vordefinierte und empfängerbezogene Interaktionsmöglichkeiten mit Inhalten, die durch das interaktive Buch dargestellt werden. Die Interaktionselemente werden durch die jeweiligen Inhalte bestimmt, wobei diese Elemente vorgreifend für Inhalte gesetzt werden. Dieses Patent beschreibt eine sehr spezifische Anwendung einer Fernbedienung / Steuerung für Buchinhalte, welche aufgrund des Aufkommens von Tablet-Computern und Touchscreens als nicht mehr zeitgemäß betrachtet werden kann.

[Patent US IB3 1995] zeigt ein technisches Gerät zur empfängerbezogenen Herstellung von Interaktivität. Durch die zweckbestimmte (dedizierte), technisch proprietäre Umsetzung eines generischen technischen Buchs, welches Interaktionselemente enthält, auf welche Schablonen gelegt werden können, um einen Geschichtskontext darzustellen, ist die Verwendbarkeit dieses Buches stark eingeschränkt und kann ebenfalls nicht mehr als zeitgemäß betrachtet werden.

### Interaktives Spielzeug

Interaktives Spielzeug ist oft durch kostengünstige elektrische Schaltkreise realisiert, wobei hier auch preiswerte Computertechnologie Einzug hält. In [Patent US IT2 1999] wird eine technische Realisierung in Kofferform beschrieben, welche dazu genutzt werden soll, interaktive Geschichten vorzulesen. Als Interaktionselemente dienen hierbei Figuren, die im Koffer platziert oder eingesteckt werden können. Ein Sensor reagiert auf diese Platzierung und gibt entsprechend Geräusche sowie aufgenommenen, gesprochenen Text wieder. Bei diesem Patent handelt es sich um eine zweckbestimmte (dedizierte), technisch proprietäre Plattform, welche auch durch einen Computer ersetzt werden könnte.

[Patent US IT1 2003] beschreibt ein interaktives Spielzeug, welches genutzt werden kann, um markierte Bücher vorzulesen. Hierfür erhält jedes Buch Kontakte, welche an Kontakte an einem Spielzeug, hier Teddybär, gehalten werden können. Hierbei werden die Buchinformationen übertragen und von dem Spielzeug akustisch wiedergegeben. Für das Wiedergeben ist eine nicht näher beschriebene zentrale Steuereinheit zuständig, welche akustische Signale an im Spielzeug eingebaute Lautsprecher sendet.

### Nachteile des Standes der Technik

Die obige Analyse des Stands der Technik zeigt, dass es zahlreiche thematisch verwandte Publikationen und Patente in dem Feld der interaktiven Systeme mit Bezug auf entferntes Lernen und entfernte Kommunikation gibt. Hierbei kann aber festgehalten werden, dass die beschriebenen Systeme folgende Nachteile bzw. Einschränkungen besitzen:
- In der Audio-/Video-/Chat-Kommunikation beschränkt man sich auf Audio-/Video-/Chat-Nachrichten. Moderne Computerspiele ermöglichen einen definierten Grad an Interaktivität, sind aber auf die dedizierte Spielwelt beschränkt.
- Oft werden Verfahren beschrieben, mit denen interaktive Medien erstellt und an Empfänger zugestellt werden; welcher in Echtzeit auf Medien einwirken kann. Allgemein laufen die Kommunikationen in diesen Systemen asynchron ab, d. h. etwas wird erstellt, danach zugestellt, danach (evtl. interaktiv) "konsumiert".
- Die Patente beziehen sich auf sehr spezifische Bereiche, z. B. Vermitteln von Computerprogrammanwenderwissen.
- Die Patente sind allgemein empfängerbezogen konzipiert, was auch für die Interaktion zutrifft.
- Die Patente beschreiben zweckbestimmte, technisch proprietäre Lösungen und Plattformen, welche eine eigene Produktion erfordern und nicht die

Allgemeinverwendbarkeit von modernen Computer oder Tablet-Computern berücksichtigen.

### Beschreibung der Erfindung

Aufgabe der vorliegenden Erfindung ist es, ein Verfahren und ein System zum interaktiven Kommunizieren bereitzustellen, welches insbesondere in der Lage ist, interaktiv oder automatisch, dynamische/interaktive und/oder statische Inhalte (hier: zusammengesetzte Inhalte = Abläufe) einem Nutzer auch in Echtzeit bereitzustellen. Dabei sollen vorzugsweise diese Abläufe situationsbedingt (interaktiv) anpassbar sein. Diese Anpassungen sollen vorzugsweise das Interesse, die Aufmerksamkeit, aber auch die persönliche Bindung zu den vermittelten Inhalten erhöhen. Hierbei sollen vorzugsweise die Inhalte nicht auf bestimmte Bereiche beschränkt sein und die Plattform aus Kostenreduktionsgründen keine technisch proprietäre Lösung darstellen. Weiterhin soll vorzugsweise berücksichtigt werden, dass moderne KI Systeme derzeit noch nicht dazu in der Lage sind, die Verfassung eines Menschen in der Qualität zu erfassen, dass mit den Ergebnissen verlässlich weitergearbeitet werden kann.

Die vorstehend beschriebene Aufgabe wird durch das Verfahren und das System mit den Merkmalen der unabhängigen Patentansprüche gelöst.

Das erfindungsgemäße System basiert auf der einen Seite auf Abläufen (bestehend aus einer Menge von Inhalten), welche ein Ersteller oder das System selbst erzeugt, und auf der anderen Seite auf Empfängern, welche die Abläufe erhalten. Abläufe wiederum bestehen aus Inhalten, welche aus medialen Informationen bestehen (vorzugsweise akustische oder visuelle Informationen, wobei grundsätzlich jedoch alle vermittelbaren Sinneseindrucke denkbar sind).

Folgende Akteure / Nutzer / Kommunikationspartner werden im System registriert:
- Interaktiver Ersteller: Dieser Nutzer besitzt die Möglichkeit, interaktiv in Echtzeit auf die gesendeten Abläufe einzuwirken, welches er basierend auf situationsbezogenen Informationen tut.
- Statischer Ersteller: Dieser Nutzer definiert vorgreifend Abläufe für Empfänger, wobei er Zugriff auf Präferenzen und weitere Nutzer-/Gruppeninformationen hat.
- Interaktiver Empfänger: Dieser Nutzer erhält die erzeugten Abläufe und kann Einfluss auf diese nehmen. Die Art des Einflusses kann definiert werden.
- Statischer Empfänger: Dieser Nutzer erhält Abläufe, auf die er keinen Einfluss hat.

Für das System werden folgende Kommunikationspaarungen möglich sein:
- Interaktive(r) Ersteller ↔ Interaktive(r) Empfänger
- Interaktive(r) Ersteller ↔ Passive(r) Empfänger
- Statische(r) Ersteller ↔ Interaktive(r) Empfänger
- Statische(r) Ersteller ↔ Passive(r) Empfänger
- System ↔ Interaktive(r) Empfänger
- System ↔ Passive(r) Empfänger

Ausgeschrieben bedeutet dies, dass prinzipiell auch mehrere Ersteller in Echtzeit mit mehreren Empfängern interagieren können, wobei auch das System alleine mit mehreren Empfängern eine Kommunikationsbeziehung haben kann.

Ein Aspekt der Erfindung betrifft ein Verfahren zum interaktiven Kommunizieren mittels eines Systems. Dabei weist das System auf: eine Datenbank zur Speicherung von Nutzerprofilen und Inhalten, Ablaufvorlagen und Abläufen sowie eine Entwurfseinrichtung zum Ermitteln von Inhalten, Ablaufvorlagen und Abläufen. Das Verfahren weist dabei folgende Schritte auf:
(1a) Verbinden eines oder mehrerer Nutzer mit dem System;
(1b) Zuordnen der verbundenen Nutzer zu jeweils in der Datenbank gespeicherten Nutzerprofilen;
(1c) Ermitteln von zu den Nutzerprofilen der verbundenen Nutzer passenden Inhalten, Ablaufsvorlagen und/oder Abläufen durch die Entwurfseinrichtung;
(1d) Senden der ermittelten Inhalte, Ablaufsvorlagen und/oder Abläufe an mindestes einen der mit dem System verbundenen Nutzer;
(1e) Empfangen und Verarbeiten von durch mindestens einen der verbundenen Nutzer interaktiv generierten Signalen zum Erstellen eines Ablaufs aus den zu dem mindestens einen Nutzer übermittelten Inhalten, Ablaufsvorlagen oder Abläufen und/oder aus anderen Inhalten.

In einer Ausführungsform des Verfahrens weist das System ferner eine Input-Output-Steuerung zur Anbindung von Nutzer-Endgeräten sowie eine Zentralkomponente zum Datenaustausch zwischen Datenbank, Entwurfseinrichtung und Input-Output-Steuerung auf. Zudem weist Schritt
(1a) den folgenden Schritt auf:
(2a) Anmelden des einen oder der mehreren Nutzer(s) über die Input-Output-Steuerung an der Zentralkomponente, vorzugsweise mit einem sicheren Authentisierungsverfahren.

In einer bevorzugten Ausführungsform des Verfahrens weist Schritt (1a) den folgenden Schritt auf:
(3a) Verbinden von mindestens zwei Nutzern mit dem System, wobei mindestens ein Nutzer ein "Ersteller" und mindestens ein Nutzer ein "Empfänger" ist; und
   Schritt (1b) weist den folgenden Schritt auf:
(3b) Zuweisen der Nutzer zu den Kategorien "Ersteller" oder "Empfänger".

Vorzugsweise weist das Verfahren im Anschluss an Schritt (1e) die folgenden weiteren Schritte auf:
(4a) Senden des von dem/den Ersteller(n) erstellten Ablaufs zu dem/den Empfänger(n) in Echtzeit;
(4b) Empfangen einer oder mehrerer Interaktionen des/der Empfänger;
(4c) Senden der Interaktionen des/der Empfänger an den/die Ersteller;
(4d) Wiederholen der Schritte (1e), (4a) bis (4d) oder Beenden der durch die Schritte (1e), (4a) bis (4c) gegebenen interaktiven Kommunikation.

In einer Ausführungsform des Verfahrens weisen Inhalte eine oder mehrere der folgenden medialen Formen auf: Text, Audio, Video, Bilder und/oder interaktive Elemente, beispielsweise anklickbare Bilder, anklickbare Spiele, anklickbare Videos, anklickbaren Text.

In einer Ausführungsform des Verfahrens weist Schritt (1e) des Empfangens und Verarbeitens von interaktiv generierten Signalen zum Erstellen eines Ablaufs zumindest einen der folgenden Schritte auf:
(6a) Auswählen eines bereits fertigen, in Schritt (1c) ermittelten Ablaufs;
(6b) Editieren einer in Schritt (1c) ermittelten Ablaufvorlage;
(6c) Zusammenstellen eines oder mehrerer Inhalte zu einem Ablauf, wobei der eine oder die mehreren Inhalte:
   von dem/den Nutzer(n) selbst verfasste Inhalte sind; und/oder
   dem Internet oder einer Cloud entnommen werden; und/oder
   in der Datenbank vorhanden sind; und/oder
   in Schritt (1c) ermittelt wurden;
(6d) Kombinieren zweier oder aller Schritte aus den Schritten (6a) bis (6c).

Vorzugsweise werden dabei den Inhalten, Ablaufsvorlagen und Abläufen in der Datenbank jeweils eine oder mehrere nutzergruppenspezifische Markierungen/Kategorisierungen zugeordnet.

In einer Ausführungsform weist das Verfahren im Anschluss an Schritt (4d) folgende weitere Schritte auf:
(8a) Bewerten des Ablaufs und/oder der im Ablauf enthaltenen Inhalte;
(8b) Verknüpfen des Ablaufs und/oder der im Ablauf enthaltenen Inhalte in der Datenbank mit der in Schritt (8a) erfolgten Bewertung.

Vorzugsweise weist dabei die Bewertung nach Schritt (8a) den folgenden Schritt auf:
(9a) Empfangen einer Interaktion zur individuellen Bewertung des Ablaufs und/oder der Inhalte durch zumindest einen der Nutzer.

In einer Ausführungsform des Verfahrens weist das System einen Evaluator auf, und im Anschluss an Schritt (9a) werden die folgenden Schritte ausgeführt:
(10a) Analysieren der Interaktion gemäß Schritt (9a) mittels des Evaluators;
(10b) Erstellen einer Gesamtbewertung durch den Evaluator auf Grundlage der in Schritt (10a) erfolgten Analyse.

Vorzugsweise weist das Verfahren den folgenden weiteren Schritt auf:
(11a) Empfangen von einem oder mehreren bei dem/den Empfänger(n) ermittelten Werten. Dabei lassen der eine oder die mehreren Werte Rückschlüsse auf die Konzentrationsfähigkeit des / der Empfänger(s) zu. Beispielsweise kann der Wert / können die Werte den Sauerstoffgehalt der Umgebungsluft, die Luftfeuchtigkeit und/oder die Temperatur betreffen. Dabei werden die Werte mittels entsprechender Sensoren ermittelt, wobei vorzugsweise die Sensoren am Nutzer-Endgerät des Empfängers angeschlossen sind oder mit der Input-Output-Steuerung verbunden sind.

In einer bevorzugten Ausführungsform des Verfahrens erfolgt der Schritt (11a) einmalig oder wiederholt während der interaktiven Kommunikation gemäß den Schritten (1e), (4a) bis (4d), und das Verfahren weist im Anschluss an den Schritt (11a) jeweils den folgenden weiteren Schritt auf:
(12a) Übermitteln des / der gemessenen Werte(s) oder einer im System erfolgten Auswertung dieses / dieser Werte(s) an den/die Ersteller.

Dabei wird vorzugsweise der Schritt (12a) parallel zu den Schritten (1e), (4a) bis (4c) ausgeführt.

In einer Ausführungsform des Verfahrens erfolgt der Schritt (11a) vor dem Ermitteln oder während des Ermittelns passender Inhalte, Ablaufsvorlagen und/oder Abläufe nach Schritt (1c). Ferner erfolgt im System eine Auswertung dieses/dieser Werte(s). Zudem wird diese Auswertung in Schritt (1c) bei der Ermittlung passender Inhalte, Ablaufsvorlagen und/oder Abläufe berücksichtigt. In einer Ausführungsform des Verfahrens wird im Nutzer-Endgerät des/der Ersteller(s) eine Erstelleransicht angezeigt, die zumindest folgende Hauptfelder aufweist:
(14a) eine Liste von Interaktionselementen basierend auf den Inhalten;
(14b) ein Feld zur Darstellung der Abläufe, das vorzugsweise einen der Zeitabfolge des zu erstellenden Ablaufs entsprechenden Scrollbar aufweist und in das ausgewählte Interaktionselemente aus der Liste, beispielsweise mittels Drag & Drop, eingestellt werden können;
(14c) ein Feld zur Darstellung der von dem/den Empfänger(n) getätigten Interaktionen.

Vorzugsweise wird dabei im Nutzer-Endgerät des/der Empfänger(s) eine Empfängeransicht angezeigt, die zumindest folgende Hauptfelder aufweist:
(14d) ein Feld zur Darstellung des Ablaufs;
(14e) ein Feld mit Interaktionselementen.

In einer Ausführungsform kann/können der/die Ersteller dabei zwischen der Erstelleransicht und der Empfängeransicht wechseln.

Ein weiterer Aspekt der Erfindung betrifft ein System zur interaktiven Kommunikation gemäß mindestens einem Aspekt oder einer Kombination von zwei oder mehreren Aspekten des zuvor beschriebenen Verfahrens, wobei das System aufweist: eine Datenbank zur Speicherung von Nutzerprofilen und Inhalten, Ablaufvorlagen und Abläufen; sowie eine Entwurfseinrichtung zum Ermitteln von Inhalten, Ablaufvorlagen und Abläufen.

### Vorteile der Erfindung gegenüber dem Stand der Technik

Wie eingangs bereits erläutert, sind gegenwärtig Formen der Kommunikation wie beispielsweise Chat und Audio / Video (A/V) Kommunikation weit verbreitet, und ermöglichen eine aktive Kommunikation. Diese Technologien und Programme werden auch in der vorliegenden Erfindung verwendet. Die vorliegende Erfindung unterscheidet sich insbesondere dadurch von diesen Technologien, dass die Erfindung eine interaktive Kommunikation verwendet, wobei vorgefertigte Inhalte als Basis hierfür dienen.

Bei der Darstellung des Stands der Technik (siehe oben) wurde bereits auf die Übersicht von Reeves [Reeves 2003] zum Thema "Interaktives Lernen" eingegangen. Im Gegensatz zu der vorliegenden Erfindung wird jedoch bei Reeves, das allgemeinere Vermitteln von Inhalten, außer Acht gelassen. Darüber hinaus grenzt sich die vorliegende Erfindung weiter von dem bei Reeves beschriebenen Gegenstand ab, indem ein interaktiver Ersteller in Echtzeit Einfluss auf Inhalte nehmen kann, welche ein Empfänger erhält. Die Einbindung von Foren und Chats unter Verwendung von Internettechnologien in bestehende Lösungen [Reeves 1997] berühren hierbei nicht die Echtzeit-Funktionalität der vorliegenden Erfindung, da Foren keine wirkliche Echtzeitkommunikationen und Interaktivität darstellen und Chats auf Textnachrichten beschränkt sind, wobei bei der vorliegenden Erfindung direkt auf Inhalte in Echtzeit eingewirkt werden kann.

Im Kontext der Publikationen von Guzly [Guzly 2001] sowie Rieber [Rieber 1996] wird das Spielen selbst als interaktiv bezeichnet. Davon unterscheidet sich die vorliegende Erfindung derart, dass hier erfindungsgemäß Spiele interaktiv in Inhalte/Abläufe eingebunden werden können, aber selbst auch Interaktivität bieten.

Von Ho *et al.* [Patent US IL2 2012] wiederum unterscheidet sich die vorliegende Erfindung derart, dass es bei Ho *et al.* keinen interaktiven Ersteller gibt, der in Echtzeit solche Stimuli erzeugt, da sie rein programmatisch und regel-basiert ausgelöst werden.

Im Vergleich zum erfindungsgemäßen System und dem erfindungsgemäßen Verfahren sieht "Façade" nur einen "Spieler" zusammen mit zwei KI Akteuren vor. Demgegenüber können bei der vorliegenden Erfindung zahlreiche Ersteller und Empfänger interagieren.

Schließlich unterscheiden sich [Patent US IT1 2003] und die vorliegende Erfindung darin, dass es sich in [Patent US IT1 2003] um eine dedizierte, technisch proprietäre Plattform in Spielzeugform handelt und diese dadurch wenig Ähnlichkeit mit modernen Computerbasierten Ansätzen hat.

Entsprechend der oben beschriebenen Analyse des Stands der Technik können die Vorteile der vorliegenden Erfindung sowie bestimmter Ausführungsformen der Erfindung in folgender Weise umrissen werden:
- Das System betrachtet Ersteller und Empfänger, wobei beide Rollen interaktive Ausprägungen haben können. Besonders die Möglichkeit des interaktiven Erstellers, empfängerbezogene Abläufe in Echtzeit anzupassen, wird mit Hilfe der Erfindung bereitgestellt.
- Inhaltsbedingt kann eine echte Echtzeitinteraktivität zwischen Empfänger und Ersteller realisiert werden.
- Die Interaktivität ist nicht wie in Computerspielen auf die Spielwelt beschränkt, sondern wird durch die Art und Menge der verwendbaren Inhalte aus der Datenbank und den Cloud & Internetdiensten definiert.
- Die Inhalte sind nicht domänenspezifisch limitiert.
- Die Inhalte werden nutzerprofilspezifisch im Komposer angezeigt und können so generations- und (kulturell) gruppenübergreifende Kommunikation unterstützen und verbessern.
- Die Wahl einer allgemeinen, computergestützten Plattform verringert Produktionskosten der zu verwendenden Hardware (lässt sie evtl. sogar entfallen).
- Diese Erfindung ermöglicht Ersteller und Empfänger im gleichen Maße zu betrachten und ist nicht darauf beschränkt, nur einen der beiden Akteure zu betrachten.
- Es wird keine dedizierte, technisch proprietäre Lösung beschrieben, welches zu starken Einschränkungen in der Benutzbarkeit / Vielseitigkeit führen würde.
- Es wird berücksichtigt, dass Menschen aktuell besser in der Lage sind, die Verfassung eines Menschen zu beurteilen. Diese Entscheidung wird durch übermittelte Sensorwerte unterstützt.
- Abläufe können auch dynamisch erstellt werden, wobei die Inhalte basierend auf den Nutzerpräferenzen gewählt werden.

Es zeigen:
Fig. 1: Eine schematische Ansicht eines Beispiels für eine Architektur des Systems;
Fig. 2: Ein Beispiel für eine vereinfachte Darstellung der Kommunikationsbeziehungen;
Fig. 3: Ein Beispiel für eine Darstellung für die einzelnen Nutzer via Tablet oder Bildschirm; und

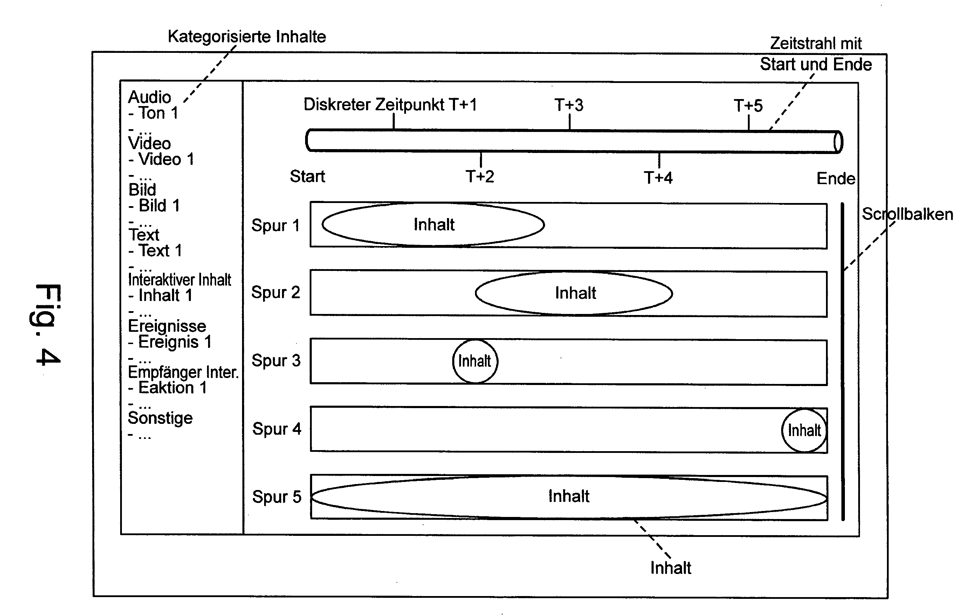

Fig. 4: Beispielhafte Komposeransicht.

Die Erfindung wird nachstehend anhand von Beispielen und der Zeichnung erläutert.

### Architektur

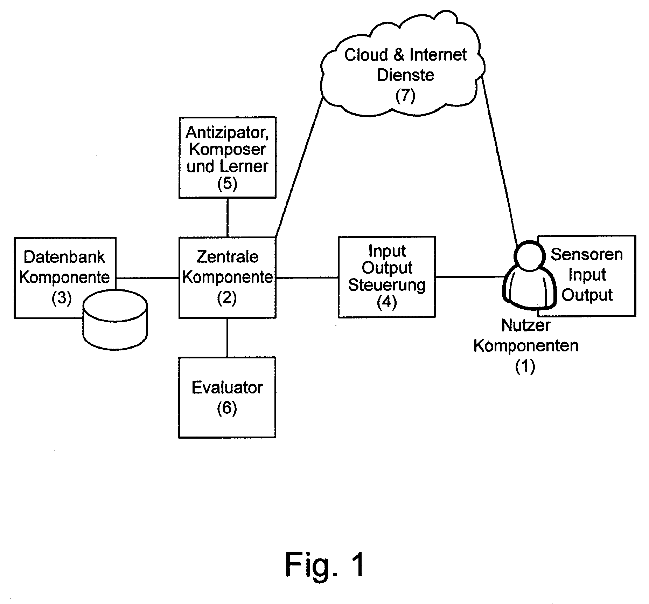

Fig. 1 zeigt eine schematische Ansicht eines Beispiels für eine allgemeine Architektur und die jeweiligen Komponenten für dieses System. Es besteht aus sieben Komponenten, welche dedizierte Aufgaben übernehmen:

Im Bereich der Nutzerkomponenten (1) können Sensoren, Eingabe-, sowie Ausgabegeräte vorhanden sein. Die Sensoren erfassen kontextbedingte Werte, welche Einfluss auf die dynamischen Inhalte haben können. Beispielsensoren betreffen die Sauerstoffsättigung, Temperatur, Luftfeuchtigkeit, Helligkeit. Als Sensor(en) kann/können aber auch eine oder mehrere Videokamera(s) in einem Raum genutzt werden. Eingabegeräte genutzt werden, um Inhalte dynamisch anzupassen, z. B. Knöpfe oder Computer. Ausgabegeräte stellen die Inhalte dar, können aber gleichzeitig auch Eingabegeräte sein, z. B. Tablet-Computer.

Die zentrale Komponente (2) realisiert das Zusammenführen aller Komponenten im System und stellt auch die zentrale Schnittstelle zur Datenbankkomponente (3) bereit.

Die Datenbankkomponente (3) speichert hierbei alle relevanten Daten für das System. Gespeichert werden vorzugsweise mindestens eines der folgenden Daten: Nutzer, Nutzerpräferenzen, Nutzereinstellungen, Nutzerrollen, Abläufe, Inhalte, Kontakte, Kontaktlisten oder Wahrscheinlichkeitsmodelle.

Die Input-Output-Steuerung (4) stellt das Interface zwischen dem System und Nutzern zur Verfügung über welches zum einen interaktive Ersteller und interaktive Empfänger Einfluss auf Abläufe nehmen können. Zum anderen werden Abläufe über diese Komponente versendet.

Der Antizipator, Komposer und Lerner (5) ist für das Erzeugen der Abläufe zuständig, wobei er hierfür auf generische Inhalte, gespeicherte Abläufe, Nutzerpräferenzen und ähnliches zugreift. Damit können Abläufe unter anderem auch dynamisch erzeugt werden. Weiterhin kann diese Komponente Nutzerpräferenzen und Sensorwerte nutzen, um die Liste der angezeigten Inhalte für den Komposer dynamisch anzupassen.

Der Evaluator (6) bietet Erstellern und Empfängern die Möglichkeit, Abläufe zu bewerten, was wiederum Einfluss auf die Nutzerpräferenzen hat.

Cloud & Internetdienste (7) können eingebunden werden, um Abläufe, Inhalte und Informationen von Dritten im System zu verwenden. Teile dieser Dienste könnte z. B. auch eine Digital Rights Management Service (DRM) sein.

### Arbeitsweise des Systems

Die Nutzung des Systems kann in drei Hauptphasen eingeteilt werden: 1. Erstellerbezogene Erzeugung der Abläufe, 2. Verbindungsaufbau zwischen den Kommunikationspartnern und 3. Abspielen der Abläufe.

### Phase I

In der ersten Phase werden Abläufe erstellt, über die Cloud & Internetdienste oder die lokale Datenbank bezogen werden. Initial wird vorzugsweise mindestens einer dieser drei Schritte ausgeführt, damit Abläufe zur Verfügung stehen. Bei der Erstellung von Abläufen kann ein Ersteller sich mittels Computer, Tablet-Computer oder ähnlichem über die Input-Output-Steuerung verbinden. Hierzu nutzt er Zugangsdaten (z. B. Benutzername und Passwort), um sich eindeutig zu identifizieren. Jeder Nutzer besitzt zugewiesene Rollen, die es ihm erlauben, verschiedenen Aktivitäten nachzukommen. Meldet sich ein Nutzer mit seinen Zugangsdaten an, und ihm wurde die Rolle des statischen Erstellers von einem Systemadministrator zugewiesen, so werden ihm auf seinem Bildschirm verschiedene Optionen / Funktionen, beispielsweise in Form von Fenstern mit vorbereiteten Bildschirmmasken oder Templates angeboten. Rollenunabhängige Optionen betreffen z. B. die Nutzerdatenverwaltung. Für Ersteller (Hinweis: es können auch mehrere Ersteller aktiv sein, welche mit mehreren Empfängern auch in Echtzeit interagieren können) wird die Option "Neuen Ablauf erzeugen" angezeigt. Wählt er diese, wird ihm ein neues Fenster angezeigt, in dem er zwischen den Optionen "Komplett neuen Ablauf erzeugen", "Ablauf aus Template erzeugen" und "Fertige Abläufe beziehen" auswählen kann.

Wählt der Ersteller "Komplett neuen Ablauf erzeugen", so bekommt er ein neues Fenster angezeigt, welches ihm ermöglicht, Optionen für einen neu zu erstellenden Ablauf zu definieren (Komposer, Teil von (5); Komposersicht). Unter anderem können Optionen für Dauer des Ablaufs, Art des Ablaufs (z. B. visuell, akustisch oder sonstige), Name des Ablaufs, Möglichkeit der Empfängerinteraktionen und weiteres gesetzt werden. Solche Abläufe werden lokal in der Datenbank (3) abgespeichert. Sind die Optionen gesetzt, kann der Ersteller die Abläufe definieren. Hierfür sieht er zuallererst einen scrollbaren zeitlichen Rahmen und Ereignisspuren, welche vom Ersteller durch Ereignisse / Inhalte belegt werden können (Vgl. Magix Music Maker [Magix MM]). Inhalte können alle Formen von Medien annehmen, so z. B. Text, Video, Audio, Bilder, Interaktive Elemente (anklickbare Bilder, Spiele, Videos, Texte, etc.) und ähnliches. Das System bietet dem Ersteller eine kategorisierte Auswahl an Inhalten an, welche der Ersteller per Drag & Drop in die Spur ziehen kann.

Der Begriff "Spur" bezeichnet hier ein Konzept eines (vorzugsweise räumlich visualisierten) Zeitstrahls, welcher durch Inhalte (z. B. Text, Video, Audio, Bilder, Interaktive Elemente (anklickbare Bilder, Spiele, Videos, Texte, etc.) und ähnliches), vorzugsweise mittels Drag & Drop, gefüllt werden kann. Hierbei ist es nicht zwingend erforderlich, genaue zeitliche Markierungen (z. B. absolute Zeitangaben in Bezug auf den Ursprung des Zeitstrahls oder Markierungen, die vorbestimmten Zeitabständen, beispielsweise 5-Sekunden-Abständen, entsprechen) an dem Zeitstrahl / der Spur zu machen, da sich zeitliche Zusammenhänge auch aus relativen Abständen ergeben können, die sich beispielsweise aus der Anordnung der Inhalte in der Spur ergeben. Dennoch erlaubt eine genauere Markierung der Spur (z.B. im 5 Sekunden Abstand) ein exakteres Arbeiten beim Erstellen von Abläufen. Jeder in die Spur einzufügende Inhalt kann hierbei als relativ dargestellter Zeitabschnitt in der Spur oder als Punktverweis in der Spur ohne relative Zeitdaueranzeige dargestellt werden. Das Grundkonzept ist vergleichbar mit den verwendeten Konzepten aus Audio- und Videobearbeitungsprogrammen, z. B. Magix Music Maker (Magix MM).

Hierbei hat er durch Positionieren außerdem die Möglichkeit, den Zeitpunkt zu wählen, wann die Inhalte gestartet werden. Weiterhin bietet das System dem Ersteller an, Inhalte selbst zu erzeugen, z. B. Aufnahme von Sprache oder Video, Import / Einbinden von Medien und Text, wobei der Nutzer auch entscheiden kann, ob diese Inhalte nur für den Ablauf oder in die Liste kategorisierter Inhalte gespeichert werden sollen. Der Antizipator, Komposer und Lerner (5) bietet außerdem die Funktionalität, dem Ersteller die Liste der verfügbaren Inhalte dynamisch anzupassen. Hierfür liest die Komponente die Erstellerund Empfängernutzerpräferenzen aus der im Speicher gespeicherten Datenbank aus und erzeugt entsprechend eine Liste passender Inhalte, welche oberhalb der allgemeinen Inhalte angezeigt wird. Diese Funktionalität stellt eine Art Hilfestellung zum generationsund (kulturell) gruppenübergreifenden Kommunizieren dar. Inhalte werden hierzu in der Datenbank nutzergruppenspezifisch markiert und kategorisiert.

Es können pro Spur mehrere, auch verschieden kategorisierte Inhalte eingebunden werden. Inhalte können die Empfängerinteraktivität bestimmen, wenn diese z. B. signalisieren, dass der Empfänger interagieren kann oder soll. Hierbei bestimmt der Inhalt auch die genaue Form der Interaktion, z. B. wird eine Auswahl an anklickbaren Symbolen angezeigt, aus denen der Empfänger auswählen kann oder das System wartet auf ein akustisches Signal des Empfängers.

Wählt der Ersteller beim Erzeugen eines neuen Ablaufs "Ablauf aus Template erzeugen" oder "Fertige Abläufe beziehen", so bekommt er eine Liste von kategorisierten Templates oder fertigen Abläufen dargestellt. Beide Varianten können bei Existenz lokal (3) aber auch über die Cloud & Internetdienste (7) bezogen werden. Diese kann er dann lokal anlegen, und auf Wunsch editieren. Der Unterschied zwischen Template und fertigem Ablauf ist, dass ein Template editiert werden muss, während ein fertiger Ablauf editiert werden kann.

### Phase II

In der zweiten Nutzungsphase des Systems wird eine Verbindung zwischen Nutzern hergestellt. Das Kommunikationssystem selbst folgt verbreiteten Funktionen, welche z. B. in den Programmen Google Talk, WhatsApp, ICQ und ähnlichen angeboten werden. Die Nutzer können hier primär über Audio, Video und Text kommunizieren. Die Anzeige entsprechender Kommunikationsfenster kann durch den Nutzer bestimmt werden. Zum Aufbau von Kommunikationsverbindungen steht den Nutzern nach der Verbindung zum System mittels Zugangsdaten eine Option / Funktion zur Verfügung, welche dafür verantwortlich ist, eine Kontaktliste darzustellen über welche eine Kommunikationsverbindung aufgebaut werden kann. Kontakte können auch in Gruppen organisiert sein, welche separat kontaktiert werden können.

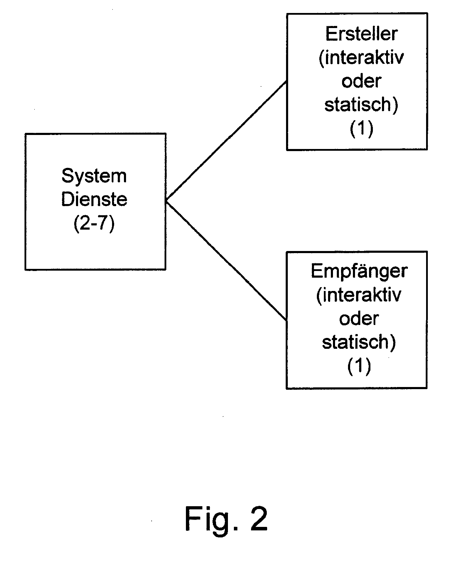

Fig. 2 illustriert die möglichen Kommunikationsbeziehungen in vereinfachter Form. Technisch gesehen können *n* Ersteller eine Verbindung zu *m* Empfängern aufbauen. Einen Sonderfall stellt die Kommunikation zwischen einem statischen Ersteller und einem Empfänger dar, da diese Kommunikation zeitlich versetzt geschieht. Der statische Ersteller kann zu einem Zeitpunkt einen Ablauf erstellen, welchen sich ein Empfänger zu einem späteren Zeitpunkt anzeigen lassen kann. Werden die Abläufe lokal oder aus den Cloud & Internetdiensten (7) bezogen, kann für diesen Kommunikationsfall auch der statische Ersteller entfallen.

Von Fig. 2 abstrahiert, ist es auch möglich, das System zur reinen und klassischen Kommunikation zu nutzen.

### Phase III

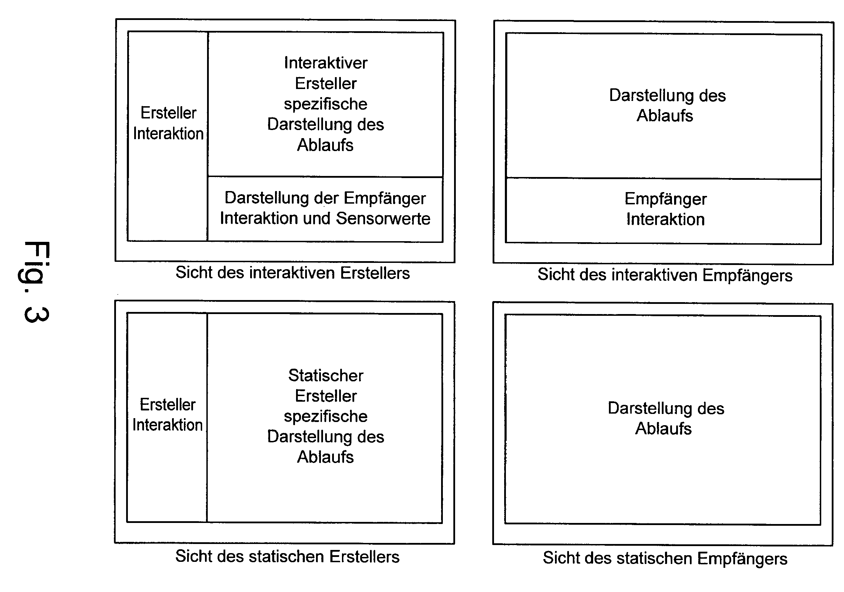

In der dritten Nutzungsphase erfolgt das Abspielen von Abläufen und entsprechende Interaktionen. Ist eine Kommunikationsverbindung zwischen interaktiven Erstellern und statischen oder interaktiven Empfängern hergestellt, wird dieses den Nutzern entsprechend Fig. 3 angezeigt.

Der interaktive Ersteller sieht drei Hauptfelder:
1. Eine Liste von Interaktionselementen basierend auf Inhalten (links).
2. Ein zentrales Feld zur Darstellung der Abläufe, wobei die Sicht angepasst werden kann: Ein- und Ausblenden von Kommunikationsfenstern, Ändern in Empfänger-Ablauf-Sicht oder Komposersicht und weitere (zentral).
3. Darstellung der getätigten Interaktion durch den Empfänger (unten).

Der interaktive Empfänger sieht zwei Felder:
1. Darstellung des Ablaufs und Einblendung weiterer Fenster, z. B. Kommunikation (zentral).
2. Feld mit Interaktionselementen, welche bei initialer Erstellzeit festgelegt werden. Dieses Feld kann mit dem Darstellungsfeld vereint sein, um so fallbedingt noch bessere Interaktion zu ermöglichen.

Der statische Empfänger sieht nur ein einziges Feld, welches den Ablauf darstellt und auch für weitere Fenster genutzt werden kann, wie das der Kommunikation.

Der interaktive Ersteller kann nun den Ablauf starten, und diesem wahlweise in der Komposersicht oder Empfängersicht folgen. Der Empfänger folgt dem Ablauf in der von den Erstellern definierten Weise. Will nun der interaktive Ersteller Einfluss auf den Ablauf nehmen, so kann er in seiner Sicht, z. B. auf der linken Seite seines Darstellungsfensters, Aktionen bezogen auf Inhalte auslösen oder diese Inhalte vorgreifend über seine Komposersicht in den Ablauf integrieren. Diese Integration, wie in der ersten Nutzungsphase beschrieben, geschieht beispielsweise mittels Drag & Drop von Inhalten in Spuren für bestimmte Zeitpunkte. Weiterhin kann der interaktive Ersteller auf beim Empfänger gemessene Sensorwerte reagieren, um die Abläufe entsprechend anzupassen. Beispielsweise könnte von einer hohen Temperatur und Luftfeuchtigkeit sowie einer niedrigen Sauerstoffsättigung auf ein beschränktes Konzentrationsvermögen in einem Klassenzimmer geschlossen werden mit der Folge, dass der interaktive Ersteller die Inhalte der Abläufe situationsgerecht gestaltet. Da Inhalte auch Empfängerinteraktion erfordern können, bieten solche spezifischen Inhalte Interaktionselemente, welche dem interaktiven Empfänger dargestellt werden (in seiner Sicht beispielsweise unten). Der interaktive Empfänger kann diese Elemente anklicken, aber auch in anderer Form Interaktionsinput erzeugen. Beispielsweise kann ein Mikrofon genutzt werden, um etwas Definiertes zu sprechen oder ein Geräusch zu machen. Diese Interaktion wird dem interaktiven Ersteller übermittelt, welche er wiederum in seiner Sicht beispielsweise unten sehen kann.

Nach Ende des Ablaufs können Ersteller und Empfänger den Ablauf selbst bewerten. Im System ist hierfür die als Evaluator (6) bezeichnete Komponente zuständig. Die Bewertungen werden genutzt, um ein Benutzerprofil zu erstellen, welches Nutzerpräferenzen darstellt. Bewertet werden können inhaltsspezifische Merkmale, wie z. B. Länge, Inhalt oder Angemessenheit, wobei jeder Ablauf entweder mit allgemeinen oder erstellerbestimmten Bewertungskriterien zur Erstellzeit ausgestattet werden kann. Das Bewerten durch die Ersteller und Empfänger ist optional, bildet aber die Basis des Lerners, Komposers und Antizipators (5).

Die Erfindung kann auch durch einzelne Nutzer verwendet werden, ohne dass Abläufe für sie vorher erstellt wurden. Ein Nutzer kann sich mit seinen Zugangsdaten mit dem System verbinden und sich Abläufe basierend auf seinen Nutzerpräferenzen erzeugen lassen. In einfachster Form und bei mangelnden und nicht ausreichend im System erfassten Präferenzen kann dem Nutzer ein Video, Fernsehsenderprogramm, ein Hörbuch oder ähnliches übermittelt werden, welches er danach bewertet. Mit detaillierteren Nutzerpräferenzen hat der Lerner, Komposer und Antizipator (5) im Abgleich mit ähnlichen Nutzerpräferenzprofilen die Möglichkeit, die Qualität des Nutzerprofils zu verbessern, um so entsprechend passende Ablaufe auszuwählen, die dem Nutzer gezeigt werden. Bei ausreichend vorhandenen Nutzerpräferenzen kann der Lerner, Komposer und Antizipator (5) dynamisch Einfluss auf Abläufe nehmen. Werden zum Beispiel in den Nutzerpräferenzen präferierte Musikrichtungen beschrieben, so kann der Lerner, Komposer und Antizipator (5) dynamisch einen Ablauf erzeugen, welcher musikbasierte Inhalte aneinanderhängt. Technisch kann hierbei jede passende Form von Recommendersystemen eingesetzt werden, welche unter anderem bei Google, Youtube oder Amazon Verwendung finden. Handelt sich in diesem Fall um einen interaktiven Empfänger, so kann ihm der Lerner, Komposer und Antizipator (5) dynamisch Interaktionselemente erstellen, um den Nutzer Einfluss auf den Ablauf geben zu können (z. B. eine Auswahl von Musikstücken, die als nächstes abgespielt werden sollen). Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Referenzen

| | |
|---|---|
| [Wiki TEL] | "Telefonie", http://de.wikipedia.org/wiki/Telefonie |
| [Skype] | "Skype", http://www.skype.com/ |
| [ICO] | "ICQ", www.icq.com |
| [Google Talk] | "Google Talk", http://www.google.de/talk/ |
| [Reeves 2003] | *"Interactive Learning Systems Evaluation*", Reeves *et al.,* |
| | http://books.google.de/books?id=xc5AiTr9VbQC&dg)=interactive+le arning&lr=&hl=de&source=gbs_navlinks_s |
| | http://books.google.de/books?hl=de&lr=&id=xc5AiTr9VbQC&oi=f nd&pg=PR11&dq=interactive+learning&ots=y7SJuWuvgK&sis=xS uZDr9qhJS3DMcSnDCfeM_lyrg#v=onepase&q=interactive%20lear ning&f=false |
| [Reeves 1997 - Ch. 6] | |
| | *"Effective Dimensions of Interactive Learning on the World Wide Web*" in *"Web-based Instructions*", Reeves *et al.,* 1997 |
| | http://books.google.de/books?hl=de&lr=&id=natcmen0J_gC&oi=fn d&pg=PA59&dq=interactive+learning&ots=frJJqGUoOj&sis=m8ee ACFxSzsPB8EPnPwhK6V7hkM#v=onepage&q=interactive%20lear ning&f=false |
| [Guzly 2001] | *"Simulated Computer-Mediated* / *Video-Interactive Distance Learning: A Test of Motivation, Interaction Satisfaction, Delivery, Learning & Perceived Effectiveness*", Guzly *et. al.,* 2001, |
| | http://jcmc.indiana.edu/vol6/issue3/guzley.html |
| [Rieber 1996] | "Seriously considering play: Designing interactive learning environments based on the blending of microworlds, simulations, and games", Rieber, L. P.. Educational Technology Research & Development, 44(2), 43-58, |
| | http://lrieber.coe.uga.edu/play.html |
| [Patent US IL1 1995] | |
| | *"Interactive Learning System",* Lubin *et al.,* 1995, |
| | http://www.google.de/patents/US5395243?hl=de&dq=interactive+le arning |
| [Patent US IL2 2012] | |
| | *"Learning Method and System Using Detached Sensor",* Ho *et al.,* 2012, US Patent Publication number [Patent US IL] |
| | US 2012 0 237 920 A1, File Number 13/481,821, |
| | http://www.google.com/patents/US20120237920 |
| [Façade 2006] | *"Façade",* Mateas *et al.,* 2006, |
| | http://en.wikipedia.org/wiki/Fa%C3%A7ade_%28interactive_story %29 |
| [Patent US IB1 1995] | |
| | *"Interactive book device",* Jay Smith III, US Patent Number 5 466 158, |
| | http://www.google.de/patents?hl=de&lr=&vid=USPAT5466158&id =8X8cAAAAEBAJ&oi=fnd&dq=interactive+book&printsec=abstra ct#v=onepage&q=interactive%20book&f=false |
| [Patent US IB2 1995] | |
| | *"Interactive Book, magazine and audio* / *video compact disc box",* Redford et al., US Patent Number 5 749 735, |
| | http://www.google.de/patents?hl=de&lr=&vid=USPAT5749735&id =XQUhAAAAEBAJ&oi=fnd&dq=interactive+book&printsec=abstr act#v==QllEmage&q=interactive%20book&f=false |
| [Patent US IB3 1995] | |
| | *"interactive book",* Burrows et al., US Patent Number 5 413 486, |
| | http://www.google.de/patents?hl=de&lr=&vid=USPAT5413486&id =pDOhAAAAEBAJ&oi=fnd&dq=interactive+book&printsec=abstra ct#v=onepage&q=interactive%20book&f=false |
| [Patent US IB4 2009] | |
| | *"Systems and Methods for Interactive Reading*", Girsch *et al.,* US Patent Publication Number US 2010/0 122 170 A1, File Number 12/618,671, |
| | http://www.google.com/patents/US20100122170 |
| [Patent US IB5 2012] | |
| | *"System and methods for generating interactive digital books",* Ahmed *et al.,* 2012, US Patent Publication Number US 2012 0 229 391 A1, File Number 13/347,539, |
| | http://www.google.com/patents/US20120229391 |
| [Patent US IT1 2003] | |
| | *"interactive toy and method of control thereof",* Pratte *et al.,* 2003, US Patent Number 10/375,255, |
| | http://www.google.com/patents/US20030162475 |
| [Patent US IT2 1999] | |
| | *"electronic story board",* Chi-Ming Lam, Application No. 09/324,679, |
| | http://www.patentbuddy.com/Patent/6190174 |

## Patentansprüche

1. Verfahren zum interaktiven Kommunizieren mittels eines Systems,
wobei das System aufweist:
eine Datenbank zur Speicherung von Nutzerprofilen und Inhalten, Ablaufvorlagen und Abläufen;
eine Entwurfseinrichtung zum Ermitteln von Inhalten, Ablaufvorlagen und Abläufen; und wobei das Verfahren folgende Schritte aufweist:
(1a) Verbinden eines oder mehrerer Nutzer mit dem System;
(1b) Zuordnen der verbundenen Nutzer zu jeweils in der Datenbank gespeicherten Nutzerprofilen;
(1c) Ermitteln von zu den Nutzerprofilen der verbundenen Nutzer passenden Inhalten, Ablaufsvorlagen und/oder Abläufen durch die Entwurfseinrichtung;
(1d) Senden der ermittelten Inhalte, Ablaufsvorlagen und/oder Abläufe an mindestes einen der mit dem System verbundenen Nutzer;
(1e) Empfangen und Verarbeiten von durch mindestens einen der verbundenen Nutzer interaktiv generierten Signalen zum Erstellen eines Ablaufs aus den zu dem mindestens einen Nutzer übermittelten Inhalten, Ablaufsvorlagen oder Abläufen und/oder aus anderen Inhalten.

2. Verfahren nach Anspruch 1,
wobei das System ferner aufweist:
eine Input-Output-Steuerung zur Anbindung von Nutzer-Endgeräten;
eine Zentralkomponente zum Datenaustausch zwischen Datenbank, Entwurfseinrichtung und Input-Output-Steuerung; und
wobei Schritt (1a) den folgenden Schritt aufweist:
(2a) Anmelden des einen oder der mehreren Nutzer(s) über die Input-Output-Steuerung an der Zentralkomponente, vorzugsweise mit einem sicheren Authentisierungsverfahren.

3. Verfahren nach Anspruch 1 oder 2,
wobei Schritt (1a) den folgenden Schritt aufweist:
(3a) Verbinden von mindestens zwei Nutzern mit dem System, wobei mindestens ein Nutzer ein "Ersteller" und mindestens ein Nutzer ein "Empfänger" ist; und
wobei Schritt (1b) den folgenden Schritt aufweist:
(3b) Zuweisen der Nutzer zu den Kategorien "Ersteller" oder "Empfänger".

4. Verfahren nach Anspruch 3, wobei das Verfahren im Anschluss an Schritt (1e) die weiteren Schritte aufweist:
(4a) Senden des von dem/den Ersteller(n) erstellten Ablaufs zu dem/den Empfänger(n) in Echtzeit;
(4b) Empfangen einer oder mehrerer Interaktionen des/der Empfänger;
(4c) Senden der Interaktionen des/der Empfänger an den/die Ersteller;
(4d) Wiederholen der Schritte (1e), (4a) bis (4d) oder Beenden der durch die Schritte (1e), (4a) bis (4c) gegebenen interaktiven Kommunikation.

5. Verfahren nach einem der Ansprüche 1 bis 4, wobei Inhalte eine oder mehrere der folgenden medialen Formen aufweisen: Text, Audio, Video, Bilder und/oder interaktive Elemente, beispielsweise anklickbare Bilder, anklickbare Spiele, anklickbare Videos, anklickbaren Text.

6. Verfahren nach einem der Ansprüche 1 bis 5, wobei Schritt (1e) des Empfangens und Verarbeitens von interaktiv generierten Signalen zum Erstellen eines Ablaufs zumindest einen der folgenden Schritte aufweist:
(6a) Auswählen eines bereits fertigen, in Schritt (1c) ermittelten Ablaufs;
(6b) Editieren einer in Schritt (1c) ermittelten Ablaufvorlage;
(6c) Zusammenstellen eines oder mehrerer Inhalte zu einem Ablauf, wobei der eine oder die mehreren Inhalte:
von dem/den Nutzer(n) selbst verfasste Inhalte sind; und/oder
dem Internet oder einer Cloud entnommen werden; und/oder
in der Datenbank vorhanden sind; und/oder
in Schritt (1c) ermittelt wurden;
(6d) Kombinieren zweier oder aller Schritte aus den Schritten (6a) bis (6c).

7. Verfahren nach einem der Ansprüche 1 bis 6, wobei den Inhalten, Ablaufsvorlagen und Abläufen in der Datenbank jeweils eine oder mehrere nutzergruppenspezifische Markierungen/Kategorisierungen zugeordnet werden.

8. Verfahren nach Anspruch 4 oder, soweit abhängig von Anspruch 4, einem der Ansprüche 5 bis 7, wobei im Anschluss an Schritt (4d) folgende Schritte erfolgen:
(8a) Bewerten des Ablaufs und/oder der im Ablauf enthaltenen Inhalte;
(8b) Verknüpfen des Ablaufs und/oder der im Ablauf enthaltenen Inhalte in der Datenbank mit der in Schritt (8a) erfolgten Bewertung.

9. Verfahren nach Anspruch 8, wobei die Bewertung nach Schritt (8a) den folgenden Schritt aufweist:
(9a) Empfangen einer Interaktion zur individuellen Bewertung des Ablaufs und/oder der Inhalte durch zumindest einen der Nutzer.

10. Verfahren nach Anspruch 9, wobei das System einen Evaluator aufweist und im Anschluss an Schritt (9a) die folgenden Schritte ausgeführt werden:
(10a) Analysieren der Interaktion gemäß Schritt (9a) mittels des Evaluators;
(10b) Erstellen einer Gesamtbewertung durch den Evaluator auf Grundlage der in Schritt (10a) erfolgten Analyse.

11. Verfahren nach Anspruch 3 oder, soweit abhängig von Anspruch 3, einem der Ansprüche 4 bis 10, wobei das Verfahren den weiteren Schritt aufweist:
(11a) Empfangen von einem oder mehreren bei dem/den Empfänger(n) ermittelten Werten,
wobei der eine oder die mehreren Werte Rückschlüsse auf die Konzentrationsfähigkeit des / der Empfänger(s) zulassen, beispielsweise Sauerstoffgehalt der Umgebungsluft, Luftfeuchtigkeit und/oder Temperatur,
wobei die Werte mittels entsprechender Sensoren ermittelt werden, und
wobei vorzugsweise die Sensoren am Nutzer-Endgerät des Empfängers angeschlossen sind oder mit der Input-Output-Steuerung verbunden sind.

12. Verfahren nach Anspruch 11, wobei der Schritt (11a) einmalig oder wiederholt während der interaktiven Kommunikation gemäß den Schritten (1e), (4a) bis (4d) erfolgt, und das Verfahren im Anschluss an den Schritt (11a) jeweils den weiteren Schritt aufweist:
(12a) Übermitteln des/der gemessenen Werte(s) oder einer im System erfolgten Auswertung dieses / dieser Werte(s) an den/die Ersteller;
wobei vorzugsweise der Schritt (12a) parallel zu den Schritten (1e), (4a) bis (4c) ausgeführt wird.

13. Verfahren nach Anspruch 11 oder 12, wobei:
der Schritt (11a) vor dem Ermitteln oder während des Ermittelns passender Inhalte, Ablaufsvorlagen und/oder Abläufe nach Schritt (1c) erfolgt;
im System eine Auswertung dieses/dieser Werte(s) erfolgt; und
diese Auswertung in Schritt (1c) bei der Ermittlung passender Inhalte, Ablaufsvorlagen und/oder Abläufe berücksichtigt wird.

14. Verfahren nach Anspruch 3 oder, soweit abhängig von Anspruch 3, einem der Ansprüche 4 bis 13,
wobei im Nutzer-Endgerät des/der Ersteller(s) eine Erstelleransicht angezeigt wird, die zumindest folgende Hauptfelder aufweist:
(14a) eine Liste von Interaktionselementen basierend auf den Inhalten;
(14b) ein Feld zur Darstellung der Abläufe, das vorzugsweise einen der Zeitabfolge des zu erstellenden Ablaufs entsprechenden Scrollbar aufweist und in das ausgewählte Interaktionselemente aus der Liste, beispielsweise mittels Drag & Drop, eingestellt werden können;
(14c) ein Feld zur Darstellung der von dem/den Empfänger(n) getätigten Interaktionen; und/oder
wobei im Nutzer-Endgerät des/der Empfänger(s) eine Empfängeransicht angezeigt wird, die zumindest folgende Hauptfelder aufweist:
(14d) ein Feld zur Darstellung des Ablaufs;
(14e) ein Feld mit Interaktionselementen; und
wobei vorzugsweise der/die Ersteller zwischen der Erstelleransicht und der Empfängeransicht wechseln kann/können.

15. System zur interaktiven Kommunikation gemäß dem Verfahren nach einem der Ansprüche 1 bis 14, wobei das System aufweist:
eine Datenbank zur Speicherung von Nutzerprofilen und Inhalten, Ablaufvorlagen und Abläufen;
eine Entwurfseinrichtung zum Ermitteln von Inhalten, Ablaufvorlagen und Abläufen.
